(19) Europäisches Patentamt
European Patent Office
Office européen des brevets

(11) EP 0 803 540 A2

(12) EUROPÄISCHE PATENTANMELDUNG

(43) Veröffentlichungstag:
**29.10.1997 Patentblatt 1997/44**

(51) Int. Cl.$^6$: **C08L 83/00**

(21) Anmeldenummer: **97106421.7**

(22) Anmeldetag: **18.04.1997**

(84) Benannte Vertragsstaaten:
**BE DE ES FR GB IT NL**

(30) Priorität: **26.04.1996 DE 19616795**

(71) Anmelder:
**Hüls Silicone Gesellschaft mit beschränkter Haftung**
**D-01610 Nünchritz (DE)**

(72) Erfinder:
- **Schöley, Peter**
  **01612 Nünchritz (DE)**
- **Liesch, Gisela**
  **01587 Riesa (DE)**
- **Lehnert, Robert, Dr.**
  **01069 Dresden (DE)**

(74) Vertreter: **Zöllner, Gudrun**
**Hüls Silicone GmbH**
**D-01610 Nünchritz (DE)**

# (54) Katalysator/Vernetzer-Komponente für RTV-Siliconkautschukmischungen

(57) Die Erfindung betrifft neue Katalysator/Vernetzer-Komponenten für RTV-Siliconkautschukmischungen auf der Basis von durch Kondensation vernetzenden Polydiorganosiloxanen. Die erfindungsgemäßen Katalysator/Vernetzer-Komponenten sind mit Alkylsilylverbindungen, die ggf. substituiert sind, und katalytisch wirkenden Zinnverbindungen an der Oberfläche modifizierte, vernetzte Polysiloxane.

EP 0 803 540 A2

## Beschreibung

Die Erfindung betrifft neue Katalysator/Vernetzer-Komponenten für RTV-Siliconkautschukmischungen auf der Basis von durch Kondensation vernetzenden Polydiorganosiloxanen. Die erfindungsgemäßen Katalysator/Vernetzer-Komponenten sind mit Alkylsilylverbindungen, die ggf. substituiert sind, und katalytisch wirkenden Zinnverbindungen an der Oberfläche modifizierte, vernetzte Polysiloxane, welche durch Umsetzung von einem Polysiloxan und einer siliciumorganischen Verbindung, die mindestens eine hydrolysierbare Gruppe enthält, in Gegenwart einer katalytisch wirkenden Zinnverbindung erhalten werden.

Bei Raumtemperatur zu Elastomeren vernetzende Siliconkautschukmischungen (RTV) sind bekannt. Sie enthalten im allgemeinen ein vernetzbares Polymer, meist ein lineares Siloxan, eine vernetzend wirkende Verbindung, einen Katalysator und ggf. weitere Zusätze wie Weichmacher, Haftvermittler, Pigmente, Verarbeitungshilfsmittel und Füllstoffe.

Siliconkautschuk-Einkomponentensysteme (RTV1) werden unter Ausschluß von Feuchtigkeit hergestellt und gelagert. Die Vernetzung der Mischungsbestandteile Siloxan und Vernetzer verläuft unter dem Zutritt von Luftfeuchtigkeit in Gegenwart des Katalysators. Bei Zweikomponentensystemen (RTV2) werden Siloxan und Katalysator/Vernetzer-System getrennt gelagert und kurz vor der Anwendung miteinander vermischt, womit die Vernetzungsreaktion eingeleitet wird. Mittels verschiedener Zusätze, wie beispielsweise von monomeren oder polymeren Silanen bzw. Siloxanen gelingt es, die Eigenschaften des fertigen Silicongummis zu beeinflussen und den Anforderungen, beispiels-weise hinsichtlich Haftfestigkeit und/oder Heißwasserstabilität, anzupassen.

Die Mischung der einzelnen Bestandteile kann auf vielfältige Weise erfolgen. Bei Zweikomponentensystemen werden üblicherweise in das polymere Siloxan Füllstoff und gegebenenfalls weitere Zusätze eingearbeitet. Die Herstellung kann mit bekannten Mischaggregaten, wie Dissolver-Mischer, Kneter oder Extruder kontinuierlich oder diskontinuierlich erfolgen.

Ein wesentliches Problem bei der Herstellung der Siliconkautschukmischungen besteht in der Herstellung des Katalysator/Vernetzer-Systems, welches hinsichtlich Reaktivität und Viskosität möglichst unverändert über einen längeren Zeitraum haltbar sein sollte und neben Katalysator und Vernetzer üblicherweise sog. gebrauchswertsteigernde Zusätze enthält (s. auch W. Noll, Chemie u. Techn. d. Silicone, 2. Aufl., 1968, S. 340).

US 4,490,500 beschreibt eine RTV2-Siliconkautschukmischung, bei welcher die eine, Katalysator und Vernetzer enthaltende Komponente erhalten wird durch Umsetzung von Tetraethoxy- bzw. Methyltriethoxysilan, Dibutylzinndilaurat und $\gamma$-Aminopropyltriethoxysilan in Gegenwart von hydrophober hochdisperser Kieselsäure, Calciumcarbonat und einem linearen Siloxan mit Dimethylvinylsiloxy-Endgruppen.

Die Umsetzung von Katalysator und Alkoxysilan als Vernetzersystem beschreibt DD 083 248, dazu werden die Bestandteile vermischt und anschließend erwärmt, wobei entstehende leichtflüchtige Reaktionsprodukte entfernt werden können. Nach Zusatz weiterer Alkoxysilane zu dem erhaltenen Umsetzungsprodukt wird das Gemisch als eine der zwei Komponenten in RTV2-Siliconkautschukmischungen eingesetzt.

In den angeführten Patenten werden monomere hydrolysierbare Alkoxysilane und Katalysator miteinander umgesetzt und es entstehen neben den Monomeren mehr oder weniger oligomere Produkte, in denen die einzelnen Verbindungen statistisch, in Abhängigkeit von Konzentration und Reaktivität, verteilt sind bzw. bei Abwesenheit von hydroxylgruppenhaltigen Verbindungen oder Luftfeuchtigkeit die Monomeren als Hauptprodukt vorliegen.

Aufgabe der Erfindung war es, Katalysator/Vernetzer-Komponenten für RTV-Siliconkautschukmischungen auf der Basis von durch Kondensation vernetzenden Polydiorganosiloxanen bereitzustellen, bei der die vernetzend wirkenden und/oder gebrauchswertsteigernden siliciumorganischen Verbindungen sowie der Katalysator in einem System zum Einsatz kommen, welche sich neben einer guten Lagerstabilität durch eine hohe Wirksamkeit auszeichnet. Die bereitzustellenden Katalysator/Vernetzer-Komponenten sollen es insbesondere gestatten, auf einem Untergrund, wie beispielsweise Glas, gut haftende RTV-Siliconkautschukmischungen herzustellen, welche sowohl eine hohe Frühbelastbarkeit des verklebten Gefüges (ausreichende Adhäsions- und Kohäsionskräfte nach wenigen Stunden Vernetzung) als auch eine ausgezeichnete Heißwasserstabilität nach Lagerung der Verklebungen gewährleisten.

Erfindungsgemäß ist die Katalysator/Vernetzer-Komponente für RTV-Siliconkautschukmischungen ein mit Alkylsilylverbindungen, die ggf. substituiert sind, und katalytisch wirkenden Zinnverbindungen an der Oberfläche modifiziertes Polyalkylsiloxan, welches ein Umsetzungsprodukt von

(a) einer siliciumorganischen Verbindung der allgemeinen Formel

$$(SiO_{4/2})_x(R^1SiO_{3/2})_y(R^1_2SiO_{2/2})_z(R^1_3SiO_{1/2})_w \quad (I),$$

worin $R^1$ unabhängig voneinander substituierte und/oder unsubstituierte, gesättigte und/oder ungesättigte Alkyl-, Alkeny- oder Arylreste und/oder $OR^2$ und/oder OH oder Wasserstoff mit der Maßgabe darstellt, dass nur ein Wasserstoff pro Silicium gebunden ist, und $R^2$ substituierte und/oder unsubstituierte, gesättigte und/oder ungesättigte Kohlenwasserstoffreste mit 1 bis 10 Kohlenstoffatomen bedeuten und die Summe ( x+y+z+w ) Werte größer 2

annimmt, mit

(b) mindestens einer siliciumorganischen Verbindung der allgemeinen Formel

$$R^2_kR^3_lSiX_{4-(k+l)} \quad (II),$$

worin $R^2$ die oben angegebene Bedeutung aufweist und $R^3$ unabhängig voneinander, substituierte und/oder unsubstituierte, gesättigte und/oder ungesättigte lineare, verzweigte und/oder cyclische Kohlenwasserstoffreste mit mindestens drei Kohlenstoffatomen darstellen, X eine hydrolysierbare Gruppe bedeutet, k Werte von 0 bis 2 und die Summe (k+l) Werte zwischen 1 und 3 annehmen, und/oder deren Teilkondensate, in Gegenwart

(c) einer die Reaktion zwischen (a) und (b) katalysierenden Zinnverbindung darstellt.

Die siliciumorganischen Verbindungen der allgemeinen Formel (I) sind vorzugsweise nieder- bis hochmolekulare Kondensationsprodukte von Alkyltrialkoxysilanen mit einem $C_1$- bis $C_4$-Alkylrest. Üblicherweise verwendet man Methylsiliconharze, welche aus Einheiten der Struktur ($R^1SiO_{3/2}$) (T-Einheiten) und aus Einheiten der Struktur ($R^1_2SiO_{2/2}$) (D-Einheiten) bestehen, wobei in der allgemeinen Formel (I) x und w gleich 0 sind sowie y vorzugsweise Werte zwischen 2 und 500 und z Werte zwischen 0 und 80 annehmen, und $R^1$ ein Methylrest ist. Es können jedoch auch Polysiloxane aus Einheiten der Struktur ($R^1_3SiO_{1/2}$) (M-Einheiten), ($SiO_{4/2}$) (Q-Einheiten) sowie gegebenenfalls ($R^1_2SiO_{2/2}$) (D-Einheiten) verwendet werden, wobei in der allgemeinen Formel (I) y gleich 0 ist, x Werte zwischen 2 und 300, z Werte zwischen 0 und 200 und w Werte zwischen 2 und 300 annehmen. Bevorzugte Reste $R^1$ sind Methyl-, Ethyl- oder Vinylreste, aber auch Phenyl ist möglich.

Die siliciumorganischen Verbindungen der allgemeinen Formel (II) weisen beispielsweise als Reste $R^3$ Octyl-, Cyclohexenyl- und/oder Isobutylreste auf, aber auch andere Alkylreste, die linear, verzweigt oder cyclisch sein können sowie Alkenyl-, Allyl-, Cycloalkyl- bzw. -alkenyl-, Aryl-, Alkyl-aryl- oder Arylalkylreste, substituiert oder unsubstituiert, können gebunden sein. Bevorzugt werden Verbindungen der allgemeinen Struktur $R^3Si(OR^4)_3$, eingesetzt, wobei $R^4$ Kohlenwasserstoffreste mit 1 bis 4 Kohlenstoffatomen darstellt. Beispiele dafür sind Octyltriethoxysilan, Iso-Butyltrimethoxysilan oder Cyclohexenylethyltriethoxysilan, $\gamma$-Aminopropyltriethoxysilan oder Glycidoxypropyltrimethoxysilan.

Die Umsetzung der Verbindung der allgemeinen Formel (I) und der Verbindung der allgemeinen Formel (II) kann bei Temperaturen zwischen Raumtemperatur und 200 °C, vorzugsweise oberhalb 100 °C, erfolgen. Günstig ist das Arbeiten unter leichtem Vakuum, wobei sich bildende, leichtflüchtige Reaktionsprodukte, wie beispielsweise Alkohol entfernt werden können. Während der Reaktion lagern sich die Verbindungen der allgemeinen Formel (II) durch Spaltung und Knüpfung von Si-O-Si- bzw. Si-O-C-Bindungen in Gegenwart des Katalysators an der Oberfläche des Siloxans der allgemeinen Formel (I) an. Es finden keine Äquilibrierungsreaktionen zwischen den Verbindungen (I) und (II) statt.

Das verwendete Mengenverhältnis von (I) zu (II) ist beliebig variierbar, jedoch abhängig von der Struktur der Verbindung der allgemeinen Formel (I). Es ist günstig, das Mengenverhältnis so zu wählen, daß der Anteil an OH-Si-Gruppen in der Verbindung der allgemeinen Formel (I) niedriger als der Gehalt an Alkoxy-Gruppen in der Verbindung der allgemeinen Formel (II) ist. Ein Überschuß an Verbindung der allgemeinen Formel (II) ist vorteilhaft und stört bei der späteren Verwendung der erfindungsgemäßen Katalysator/Vernetzer-Komponente nicht.

Als die Reaktion zwischen (a) und (b) katalysierende Verbindung (c) werden organische Zinnverbindungen, wie Dibutylzinndilaurat, -acetat, -oxid oder Dimethylzinndilaurat bzw. deren Umsetzungsprodukte, verwendet.

RTV-Siliconkautschukmischungen enthalten als übliche Bestandteile:

(i) 30 bis 90 Gew.-% mindestens eines durch Kondensation vernetzbaren Polydiorganosiloxa nes der allgemeinen Formel

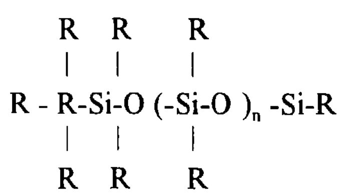

(III),

worin R Alkylrest oder OR oder OH mit der Maßgabe darstellt, daß mindestens zwei hydrolysierbare und/oder kondensierbare Reste pro Molekül gebunden sind, und n einen Wert zwischen 5 und 10.000 annimmt,

(k) 0 bis 10 Gew.-% mindestens einer siliciumorganischen Verbindung der allgemeinen Formel

$$R^2_kR^3_lSiX_{4-(k+l)} \quad (IV),$$

worin $R^2$, $R^3$ und X die o. a. Bedeutung haben,

(l) 0,01 bis 3 Gew.-% mindestens einer die Umsetzung der Komponenten (i) und (k) katalysierenden Verbindung,
(m) 0,1 Gew.-% bis 30 Gew.-%, bevorzugt 1,0 bis 10,0 Gew.-%, der erfindungsgemäßen Katalysator/Vernetzer-Komponente
(n) 1 bis 50 Gew.-% mindestens eines behandelten und/oder unbehandelten Füllstoffes sowie ggf.
(o) weitere bekannte Zusätze.

Als Verbindung (i) werden vorzugsweise silanol- und/oder alkoxyterminierte Polydiorganosiloxane eingesetzt, wobei als Organogruppen Methyl- und/oder Vinylgruppen besonders bevorzugt sind. Weitere Organoreste können sein: Alkyl-, Alkenyl-, Allyl-, Cycloalkyl, Aryl-, Alkylaryl-, Alylalkyl- oder halogenierte Kohlenwasserstoffreste, wie beispielsweise 1,1,1-Trichlorethyl-, 3-Chlor-n-propyl-, 3,3,3-Trifluor-n-propyl-, oder Chlorphenylreste.

Die siliciumorganischen Verbindungen (k) wirken vernetzend. Dabei können die gleichen Verbindungen der allgemeinen Formel (II) wie bei der Herstellung der erfindungsgemäßen Katalysator/Vernetzer-Komponente zum Einsatz kommen. Bevorzugte Vernetzer sind Verbindungen, die der durchschnittlichen Formel

$$R^4_kSiX_{4-k} \quad (V),$$

entsprechen, worin $R^4$ unabhängig voneinander, substituierte und/oder unsubstituierte, gesättigte und/oder ungesättigte, einwertige Kohlenwasserstoffreste mit 1 bis 6 Kohlenstoffatomen und X eine hydrolysierbare Gruppe bedeuten sowie k höchstens den Wert 1,9 annimmt, und/oder deren Teilkondensate. Beispiele für solche Verbindungen sind Tetrapropoxy-, -ethoxy-, -methoxysilane, Methyltrimethoxysilan oder kettenverlängernde Verbindungen, wie Diamidosilane.

Zur Umsetzung der Komponenten (i) und (k) werden als Katalysator (l) üblicherweise organische Zinn- oder Titanverbindungen oder Amine eingesetzt, am meisten verwendet wird Dibutylzinndilaurat.

Die Siliconkautschukmischung kann als Füllstoff (n) beispielsweise Calciumcarbonate, hochdisperse Kieselsäuren, Silicate, Metalloxide oder -hydroxide, Ruße, Sulfate oder Zirkonate enthalten.

Weitere Zusatzstoffe (o) können u. a. sein:

- Weichmacher, wie nichtreaktive Siliconöle oder organische Verbindungen,
- Stabilisatoren,
- Pigmente,
- mindestens ein Haftvermittler der allgemeinen Formel

$$R^4_rR^5_sSiOR^2_{4-(r+s)} \quad (VI),$$

worin $R^4$ die oben angegebene Bedeutung hat, $R^5$ mindestens einen Si-C-gebundenen Rest einer haftvermittelnden Gruppe, wie beispielsweise Amino-, Epoxy-, Mercapto- oder Acrylatgruppen, aufweist und r Werte von 0 bis 2 annimmt, s entweder 1 oder 2 und die Summe (r+s) nicht größer als 3 ist, und/oder deren Teilkondensate. Bekannte Haftvermittler sind beispielsweise Aminopropyltriethoxysilan und Glycidoxypropyltrimethoxysilan oder deren Kombinationen, aber auch Silane mit mehreren Amino- oder weiteren Alkoxygruppen bzw. Silane mit anderen funktionellen Resten sind verwendbar. Üblicherweise werden 0,02 bis 5 Gew.-% Haftvermittler eingesetzt.

Auf Basis der Komponenten (i) bis (o) können Ein- oder Zweikomponenten-Siliconkautschukmischungen formuliert werden, wobei die Mischungsherstellung diskontinuierlich oder kontinuierlich nach bekannten Verfahren erfolgt. Bei Verwendung der erfindungsgemäßen Katalysator/Vernetzer-Komponente sind beispielsweise qualitativ hochwertige RTV-2-Siliconkautschukmischungen, welche schnell haftende Vulkanisate mit einer hohen Heißwasserstabilität ergeben, formulierbar. Diese Kautschuke sind insbesondere bei der Herstellung von Mehrscheibenisolierglaseinheiten verwendbar.

Es war vollkommen überraschend, daß es durch Umsetzung von einem Polysiloxan mit einem hydrolysierbaren Silan und einem Katalysator gelingt, Katalysator/Vernetzer-Komponenten für RTV-Siliconkautschukmischungen bereitzustellen, welche eine ausgezeichnete Lagerstabilität aufweisen, also eine über einen längeren Zeitraum gleichbleibende Reaktivität behalten und nicht gelieren.

Weiterhin gelingt es mit den erfindungsgemäßen Katalysator/Vernetzer-Komponenten Siliconelastomere herzustellen, die schnell zu einem mechanisch belastbarem Material aushärten und hervorragend als Verklebungs- oder Dichtungsmaterial geeignet sind. Die mit der erfindungsgemäßen Katalysator/Vernetzer-Komponente hergestellten Mischungen ermöglichen es beispielsweise, die Festigkeiten des Verbundes Siliconkautschuk/Glas auch bei Lagerung der Verklebung über längere Zeit in heißem Wasser zu gewährleisten und damit Vulkanisate mit einer hohen Heißwasserstabilität zu erhalten.

**Ausführungsbeispiele**

Beispiele 1 bis 6

Reaktanten und Reaktionsbedingungen sind in Tabelle 1 angeführt.
Die erfindungsgemäße Katalysator/Vernetzer-Komponente wird an den Beispielen 1 und 2 verdeutlicht. Die Beispiele 3 bis 6 sind Vergleichsbeispiele und stellen den Stand der Technik dar, wobei bei Beispiel 3 soviel Wasser zur partiellen Hydrolyse verwendet wurde, um den Kondensationsgrad des in den Beispielen 1 und 2 eingesetzten Polysiloxanharzes zu erreichen.

Als Katalysator wurde eine Zinnverbindung eingesetzt, welche gemäß Stand der Technik (Noll, Chemie und Technologie der Silicone, 2. Auflage, 1968, S. 340) hergestellt wurde durch Umsetzung von 631 g (1 Mol) Dibutylzinndilaurat und 104 g (0,5 Mol) Tetraethoxysilan.

Tabelle 1

| (alle Angaben in g) | | | | | | |
|---|---|---|---|---|---|---|
| | Beispiel 1 | Beispiel 2 | Beispiel 3 Vergleich | Beispiel 4 Vergleich | Beispiel 5 Vergleich3) | Beispiel 6 Vergleich4) |
| Katalysator | 0,76 | 0,76 | 0,76 | 0,76 | 0,76 | 0,76 |
| MTMS | --- | --- | 72,5 | 35,7 | 57,7 | 40,4 |
| Wasser1) | --- | --- | 14,4 | --- | 6,8 | 1,1 |
| Methanol1) | --- | --- | 144,0 | --- | 144,0 | 144,0 |
| IBTMO | 35,79 | 35,79 | 35,79 | 35,79 | 35,79 | 35,79 |
| Polysiloxanharz2) | 35,70 | 35,70 | --- | --- | --- | --- |
| AMMO | 9,84 | 9,84 | 9,84 | 9,84 | 9,84 | 9,84 |
| GLYMO | 17,91 | 17,91 | 17,91 | 17,91 | 17,91 | 17,91 |
| Umsetzung über 5 h bei 140 °C | unter Rückfluß | Methanol abdest. | Methanol abdest. | unter Rückfluß | Methanol abdest. | Methanol abdest. |

1) Wasser und Methanol wurden zur Vermeidung von Mischproblemen vor der Dosierung gemischt.
2) Methylfestharz wurde in IBTMO gelöst, durch 29-Si-NMR ermittelte Zusammensetzung s. unter A in Tabelle 3.
3) mit maximal möglicher Wassermenge, ohne daß Gelierung eintrat
4) mit reduzierte Wassermenge

MTMS Methyltrimethoxysilan
IBTMO i-Butyltrimethoxysilan
AMMO 3-Aminopropyltrimethoxysilan
GLYMO Glycidoxypropyltrimethoxysilan

Das Umsetzungsprodukt aus Beispiel 3 gelierte und konnte nicht getestet werden.

Die Produkte aus den Beispielen 1, 2, 4, 5 und 6 wurden als Vernetzungssystem eingesetzt. Dazu wurden jeweils 10 Gew.-Teile Katalysator/Vernetzer-System (enthält gemäß Beispiel 1 und 2 die erfindungsgemäße Katalysator/Vernetzer-Komponente) mit 100 Gew.-Teilen Grundmischung vermischt.

Die Grundmischung bestand aus

- 90 Gew.-Teilen $\alpha,\omega$-Polydimethylsiloxandiol einer Viskosität von 30.000 mPas,
- 10 Gew.-Teilen Polydimethylsiloxan mit Trimethylsilylendgruppen einer Viskosität von 100 mPas,
- 90 Gew.-Teilen stearinsäurebeschichtetes Calciumcarbonat und
- 0,5 Gew.-Teilen $\alpha,\omega$-Polydimethylsiloxandiol einer Viskosität von 80 mPas.

Anschließend wurden die folgenden Kennwerte jeweils nach 24 Stunden, 7 und 14 Tagen nach Lagerung bei Raumtemperatur sowie nach 14 Tagen Lagerung in 70 °C heißem Wasser ermittelt (s.Tabelle 2):

- Spannung bei 25 % Dehnung
- Zugfestigkeit bis zur maximalen Beanspruchung
- Dehnung bei maximal möglicher Kraft.

Bei allen Umsetzungsprodukten außer Beispiel 4 erfolgte ein Kohäsionsriß (Riß im Kautschuk). Bei Vergleichsbeispiel 4 trat nach der Heißwasserlagerung der unerwünschte Adhäsionsriß (Trennung Kautschuk-Glas) auf.

Die Beispiele zeigen die gegenüber den herkömmlichen Systemen verbesserten Eigenschaften der erfindungsgemäßen Katalysator/Vernetzer-Komponente sowohl kurz nach der Verarbeitung als auch nach extremer Beanspruchung (Heißwasserlagerung).

Tabelle 2

| | Beispiel 1 | Beispiel 2 | Beispiel 4 Vergleich | Beispiel 5 Vergleich | Beispiel 6 Vergleich |
|---|---|---|---|---|---|
| vernetztes System nach 24 h | | | | | |
| Spannung [MPa] | 0,22 | 0,24 | 0,19 | 0,31 | 0,23 |
| Zugfestigkeit [MPa] | 0,51 | 0,56 | 0,42 | 0,49 | 0,45 |
| Dehnung % | 239 | 242 | 131 | 175 | 145 |
| vernetztes System nach 7 d bei RT | | | | | |
| Spannung [MPa] | 0,50 | 0,51 | 0,51 | 0,47 | 0,44 |
| Zugfestigkeit [MPa] | 0,92 | 0,90 | 0,91 | 0,81 | 0,80 |
| Dehnung % | 151 | 148 | 110 | 122 | 101 |
| vernetztes System nach 14 d bei RT | | | | | |
| Spannung [MPa] | 0,58 | 0,61 | 0,61 | 0,69 | 0,66 |
| Zugfestigkeit [MPa] | 1,09 | 1,09 | 0,97 | 0,98 | 0,98 |
| Dehnung % | 127 | 125 | 75 | 90 | 70 |
| vernetztes System nach 14 d unter Wasser bei 70 °C | | | | | |
| Spannung [MPa] | 0,31 | 0,29 | 0,19 | 0,36 | 0,26 |
| Zugfestigkeit [MPa] | 0,89 | 0,84 | 0,31 | 0,74 | 0,57 |
| Dehnung % | 249 | 230 | 96 | 209 | 141 |

Tabelle 3 enthält die 29-Si-NMR-spektroskopischen Analysen der in den Beispielen 1 bis 6 enthaltenen Katalysator/Vernetzer-Systeme. Die Angaben sind Mol-% Si der vorliegenden Baueinheiten in den Verbindungen aus den einzelnen Beispielen. Die Daten von Beispiel 3 wurden an einer Zwischenprobe gemessen, bevor die Gelierung eintrat.

Tabelle 3

| (alle Angaben in Mol-%) | | | | | | | |
|---|---|---|---|---|---|---|---|
| Si-Baueinheit | Bsp. 1 | Bsp. 2 | Bsp. 3 Vergl. | Bsp. 4 Vergl. | Bsp. 5 Vergl. | Bsp. 6 Vergl. | A |
| $RSi(OR')_3$ (-40...-44 ppm) | 24,5 | 21,2 | 18,8 | 85,4 | 20,5 | 63,6 | 17,9 |
| $RSi(OR')_2O_{1/2}$ (-48...-51 ppm) | 14,0 | 15,4 | 24,5 | 6,6 | 36,1 | 27,9 | --- |
| $RSi(OR')O_{2/2}$ (-52...-59 ppm) | 10,0 | 12,8 | 33,7 | --- | 29,8 | 6,8 | 17,7 |
| $RSiO_{3/2}$ (-62...-68 ppm) | 51,5 | 52,7 | 23,0 | 8,0 | 13,5 | 1,7 | 64,4 |

A eingesetztes Methylfestharz in IBTMO gelöst [s. 2) in Tab. 1]

Tabelle 3 zeigt, daß Katalysator/Vernetzer-Komponenten (Beispiele 1 und 2) mit hohen Anteilen an T-Strukturen im Inneren der Moleküle nur dann erzielt werden können, wenn erfindungsgemäß von vorgebildeten vernetzten Strukturen, wie sie im Siliconharz vorliegen, ausgegangen wird. Es wird kein Äquilibrierungszustand erreicht, da der Anteil der Gruppen $RSi(OR')_2O_{1/2}$ und $RSi(OR')O_{2/2}$ deutlich niedriger als der Anteil der Gruppen $RSi(OR')_3$ und $RSiO_{3/2}$ ist.

**Patentansprüche**

1. Katalysator/Vernetzer-Komponente für RTV-Siliconkautschukmischungen auf der Basis von durch Kondensation vernetzenden Polydiorganosiloxanen, darstellend ein mit Alkylsilylverbindungen, die ggf substituiert sind, und einer katalytisch wirkenden Zinnverbindung an der Oberfläche modifiziertes Polyalkylsiloxan, welches ein Umsetzungsprodukt von

   (a) einer siliciumorganischen Verbindung der allgemeinen Formel

   $$(SiO_{4/2})_x(R^1SiO_{3/2})_y(R^1{}_2SiO_{2/2})_z(R^1{}_3SiO_{1/2})_w \quad (I),$$

   worin $R^1$ unabhängig voneinander substituierte und/oder unsubstituierte, gesättigte und/oder ungesättigte Alkyl-, Alkeny- oder Arylreste und/oder $OR^2$ und/oder OH oder Wasserstoff mit der Maßgabe darstellt, dass nur ein Wasserstoff pro Silicium gebunden ist, und $R^2$ substituierte und/oder unsubstituierte, gesättigte und/oder ungesättigte Kohlenwasserstoffreste mit 1 bis 10 Kohlenstoffatomen bedeuten und die Summe ( x+y+z+w ) Werte größer 2 annimmt, mit

   (b) mindestens einer siliciumorganischen Verbindung der allgemeinen Formel

   $$R^2{}_kR^3{}_lSiX_{4-(k+l)} \quad (II),$$

   worin $R^2$ die oben angegebene Bedeutung aufweist und $R^3$ unabhängig voneinander, substituierte und/oder unsubstituierte, gesättigte und/oder ungesättigte lineare, verzweigte und/oder cyclische Kohlenwasserstoffreste mit mindestens drei Kohlenstoffatomen darstellen, X eine hydrolysierbare Gruppe bedeutet, k Werte von 0 bis 2 und die Summe (k+l) Werte zwischen 1 und 3 annehmen, und/oder deren Teilkondensate, in Gegenwart

   (c) einer die Reaktion zwischen (a) und (b) katalysierenden Zinnverbindung ist.

2. Katalysator/Vernetzer-Komponente gemäß Anspruch 1, dadurch gekennzeichnet, daß als siliciumorganische Verbindungen der allgemeinen Formel (II) nieder- bis hochmolekulare Kondensationsprodukte von Alkyltrialkoxysilanen mit einem $C_1$- bis $C_4$-Alkylrest verwendet werden.

3. Katalysator/Vernetzer-Komponente gemäß Anspruch 1, dadurch gekennzeichnet, daß die siliciumorganische Verbindung der allgemeinen Formel (II) aus Einheiten der Struktur $(R^1{}_3SiO_{1/2})$ und $(SiO_{4/2})$ besteht.

4. Katalysator/Vernetzer-Komponente gemäß Anspruch 1, dadurch gekennzeichnet, daß die siliciumorganische Verbindung der allgemeinen Formel (II) aus Einheiten der Struktur $(R^1{}_3SiO_{1/2})$, $(SiO_{4/2})$ und $(R^1{}_2SiO_{2/2})$ besteht.

5. Katalysator/Vernetzer-Komponente gemäß Anspruch 3 und 4, dadurch gekennzeichnet, daß in den Einheiten der Struktur $(R^1{}_3SiO_{1/2})$ und $(R^1{}_2SiO_{2/2})$ der Rest $R^1$ Methyl- und/oder Vinylreste bedeutet.

6. Katalysator/Vernetzer-Komponente gemäß Anspruch 1, dadurch gekennzeichnet, daß in der siliciumorganischen Verbindung der allgemeinen Formel (III) $R^3$ Propyl-, Butyl-, Isobutyl-, Octyl- und/oder Cyclohexenylreste darstellt.

7. Katalysator/Vernetzer-Komponente gemäß Anspruch 1, dadurch gekennzeichnet, daß die Verbindung der allgemeinen Formel (III) die Struktur $R^3Si(OR^4)_3$ aufweist, wobei $R^4$ Kohlenwasserstoffreste mit 1 bis 4 Kohlenstoffatomen darstellt.

8. Katalysator/Vernetzer-Komponente gemäß Anspruch 1, dadurch gekennzeichnet, daß als Zinnkatalysator (c) Dibutylzinndilaurat, -diacetat oder -oxid eingesetzt wird.

9. Katalysator/Vernetzer-Komponente gemäß den Ansprüchen 1 bis 8, dadurch gekennzeichnet, daß die Umsetzung bei Temperaturen oberhalb 100 °C durchgeführt wird.